## Europäisches Patentamt

## European Patent Office

## Office européen des brevets

(11) Numéro de publication: **0 136 194**
**A1**

# DEMANDE DE BREVET EUROPEEN

(21) Numéro de dépôt: **84401362.3**

(22) Date de dépôt: **26.06.84**

(51) Int. Cl.⁴: **B 29 B 9/06**

(30) Priorité: **06.07.83  FR 8311256**

(43) Date de publication de la demande: **03.04.85**
**Bulletin 85/14**

(84) Etats contractants désignés: **DE FR GB IT**

(71) Demandeur: **Société ATOCHEM, 12/16, allée des Vosges, F-92400 Courbevoie (FR)**

(72) Inventeur: **Orlot, Yves, 11 Impasse Michel Lagrange, F-76620 Le Havre (FR)**
Inventeur: **Charmey, Robert, 98 Boulevard Albert 1er, F-76600 Le Havre (FR)**

(54) **Couteaux de coupe de joncs de matière thermoplastique adaptables aux têtes immergées.**

㊗ Dispositif de coupe rotatif à couteaux multiples pour tête de granulation de matières thermoplastiques du type des têtes à immersion complète dans le liquide de refroidissement, coopérant avec une filière d'extrusion pourvue d'orifices d'extrusion disposés en une ou plusieurs couronnes centrées sur l'axe de la filière qui coïncide avec celui du dispositif de coupe rotatif dans lequel les couteaux ont une surface d'extrados inscrite dans un polygone régulier convexe d'angle au sommet compris entre 173° et 180° et leur surface d'intrados possède un point d'inflexion situé à une distance comprise entre le quart et la moitié de la largeur du couteau et se complète au-delà de ce point d'inflexion par un profil de dessin semblable à celui de l'extrados.

1

## COUTEAUX DE COUPE DE JONCS DE MATIERE THERMOPLASTIQUE ADAPTABLES AUX TETES IMMERGEES

L'invention concerne une amélioration apportée à un appareil à former des pastilles ou granulés à partir de joncs extrudés de matière thermoplastique.

Il en existe actuellement de nombreux types. Les plus usuels peuvent être schématisés de la manière suivante : la matière thermoplastique fondue à l'intérieur d'une extrudeuse est forcée au moyen de la vis de cette extrudeuse à travers une filière munie d'orifices cylindriques disposés suivant une ou plusieurs lignes parallèles ou suivant une ou plusieurs couronnes concentriques.

Dans le premier cas les joncs multiples qui émergent de la filière peuvent être refroidis par passage dans un bac d'eau et solidifiés. Ils passent ensuite dans un granulateur.

Dans le second cas, une tête de coupe entraînée par un moteur indépendant met en rotation un système de couteaux à symétrie de révolution autour de l'axe de la filière qui viennent couper à ras les joncs extrudés. Les pastilles de matière plastique obtenues sont le plus souvent projetées par la force centrifuge dans un carter sur les parois duquel circule un film d'eau à grand débit, lui aussi mis en mouvement par une pompe de circulation.

Un perfectionnement à ces dispositifs de coupe consiste à immerger la tête dans le liquide de refroidissement qui est alors contenu dans une chambre montée de façon étanche sur la face extérieure de la filière. Cette chambre est totalement remplie par le liquide de refroidissement, et le dispositif porte couteaux y engendre en tournant une agitation considérable.

Il est connu qu'avec ces dispositifs à tête immergée, il est très important, en vue d'obtenir la meilleure coupe des pastilles de matière thermoplastique, de maintenir à son niveau minimum le jeu entre les couteaux et la face extérieure de la filière.

Si ce jeu devient trop grand, par exemple à cause d'une usure excessive des couteaux ou par suite de variations de température et de pression au sein de la matière, il en résulte une qualité de coupe médiocre et généralement la coupe n'est pas franche et totale et la quantité de fines produites augmente notablement.

Nous avons trouvé, et ceci fait l'objet de la présente invention, en recherchant une corrélation entre la qualité de la granulation et le débit de production des granulés, qu'à condition de donner un profilage spécial aux couteaux de coupe, on pouvait élever ce débit et remédier également aux inconvénients signalés ci-dessus.

Habituellement l'élévation du débit de production ne va pas de pair avec une élévation de qualité (régularité, absence de fines) des granulés, mais le nouveau profilage permet un fonctionnement des couteaux plus près de la face de la filière avec le minimum de turbulences. Il s'ensuit une plus grande stabilité de fonctionnement de ceux-ci par la suppression presque totale des vibrations.

Ces turbulences étant la source de résistances parasites freinant le mouvement de rotation de l'appareil de coupe, il est compréhensible que le type de couteaux selon l'invention nécessite pour son entraînement une puissance plus faible, ou ce qui revient au même, qu'il est possible d'augmenter le débit de l'installation de granulation pour une même puissance motrice de cette installation.

Une conséquence secondaire mais non négligeable est une augmentation de la longévité des couteaux et porte couteaux par réduction de la corrosion due au phénomènes de cavitation dans l'eau en aval de ces organes, et, plus particulièrement, des couteaux, qui tournent sur une trajectoire de plus grand diamètre que les porte couteaux et ne peuvent pour des raisons fonctionnelles évidentes être abrités dans des moyeux profilés.

La cavitation provoque sur les couteaux une érosion particulière en forme de "trous de gruyère" et réduit en conséquence la section de ces organes. Les efforts mécaniques résultant de la coupe des joncs de matière plastique à la vitesse la plus élevée possible, joints aux efforts hydrodynamiques provoqués par le brassage de l'eau, et plus particulièrement aux dépressions et à la vaporisation partielle de l'eau dans le sillage des couteaux provoquent la rupture à terme de ces derniers.

La description qui va suivre, en regard des dessins annexés, donnés à titre d'exemple non limitatif, fera bien comprendre comment l'invention peut être réalisée, les particularités qui ressortent tant du texte que des dessins faisant, bien entendu, partie de l'invention.

La figure 1 est une vue en coupe de la plaque de filière et de l'appareil de coupe.

La figure 2 est une vue en coupe transversale d'un couteau conventionnel.

La figure 3 est une vue en coupe transversale d'un couteau selon l'invention.

La figure 4 est un graphe montrant les courbes de fonctionnement des deux types de couteaux.

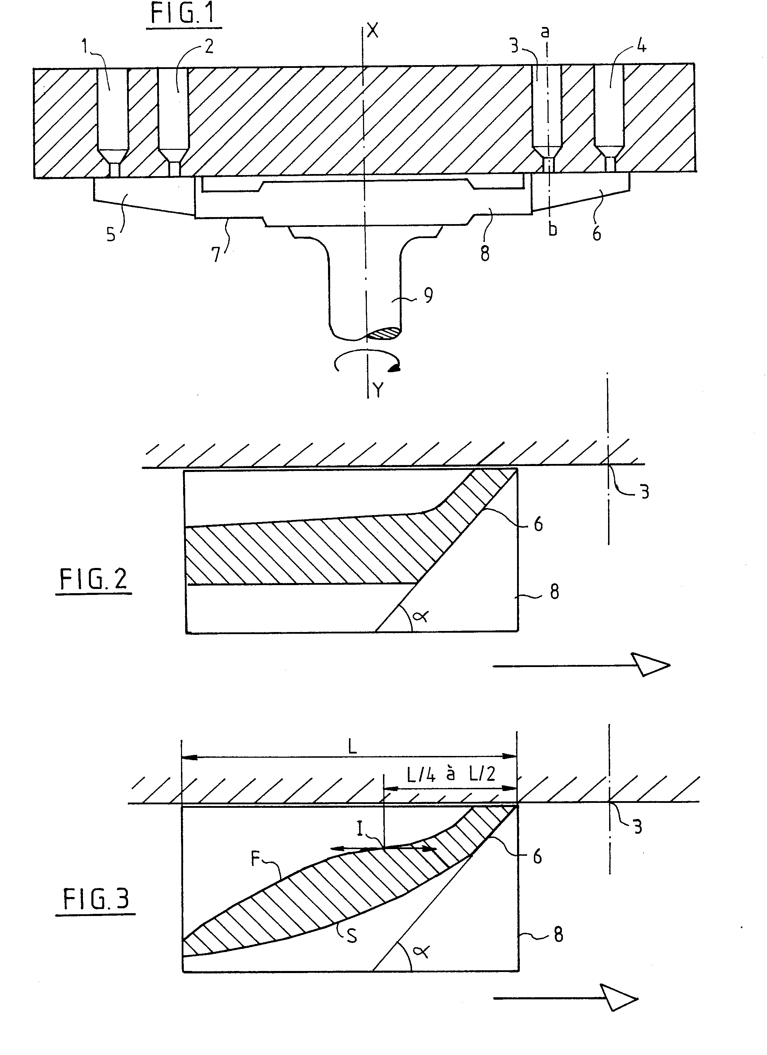

Sur la figure 1 on voit les orifices d'extrusion 1, 2, 3, 4 disposés suivant deux couronnes concentriques d'axe XY..

La matière plastique qui sort par ces orifices est tranchée par les couteaux 5, 6 montés sur les porte couteaux 7, 8 entrainés en rotation par l'arbre 9 qui tourne autour de l'axe XY.

Sur la figure 2 on voit une section transversale d'un couteau par le plan a b perpendiculaire au plan de la figure 1 et passant par l'axe de l'orifice d'extrusion 3.

Le couteau se déplace dans le plan de la face extérieure de la plaque de filière dans le sens de la flèche. Sa partie coupante est plane et elle fait un angle $\alpha$ avec le plan de la plaque de filière.

Sur la figure 3, on voit une section transversale d'un couteau suivant l'invention, effectuée dans les mêmes conditions que pour la figure 2.

A l'opposé de la filière, après une partie rectiligne limitée à quelques mm (1 à 3 mm) commence une surface S appelée extrados du couteau et inscrite à l'intérieur d'un contour polygonal régulier dont les côtés ont une longueur de 4 à 6 mm et font entre eux un angle d'environ 6° (Polygone de 60 côtés).

Nous avons vérifié que, pour cet angle, il ne se produit pas de décollement des filets d'eau, décollement générateur des turbulences dont il a été question ci-dessus. Ce décollement se produit au-dessus de 7°. Ceci implique que l'angle au sommet du contour polygonal soit compris entre 173° et 180°.

La face qui se trouve en regard de la filière, ou intrados F du couteau, comporte en partant du couteau une partie concave qui est un simple rayon de raccordement et une partie convexe dessinée comme l'extrados ci-dessus. Ces deux parties sont séparées par un point d'inflexion I situé à une distance de l'arête coupante du couteau

comprise entre le quart et la moitié de la largeur totale du couteau. La tangente au point d'inflexion est inclinée par rapport au plan de filière d'un angle compris entre 0° et 15°.

Le profil choisi pour l'intrados réduit au minimum l'interaction couteau/filière, responsable d'une forte consommation d'énergie.

Cette interaction devient très importante lorsque l'on veut rapprocher au maximum le plan de rotation des couteaux du plan de la filière, pour satisfaire à l'impératif d'une bonne granulation dépourvue de production de particules fines.

Nous avons trouvé que les couteaux à profil traditionnel donnaient lieu à une forte augmentation de la puissance consommée, principalement lorsqu'on rapproche le plan des couteaux du plan de la filière de moins d'un mm.

Nous avons trouvé par contre que la forme des couteaux selon l'invention est telle qu'elle tend à créer une pression en direction de la filière, sans qu'il y ait contact proprement dit car la distance couteaux/filière est limitée à 0,6 mm. Nous avons trouvé qu'à cette distance l'interaction couteaux/filière reste modérée.

### EXEMPLE

On veut granuler du Polypropylène d'indice de fusion = 3 (3030 BN 1 vendu par la demanderesse), sur une extrudeuse Japan Steel de type P 380 - 10 SW à deux vis en cascade, à une température moyenne de 230°C.

La vis terminale de cet aggrégat à un diamètre de 380 mm.

La filière est munie de 480 orifices d'extrusion et la tête de coupe de 16 couteaux. Elle est entrainée par un moteur de 55 KW.

Ce moteur permet théoriquement d'atteindre une vitesse maximum de 1350 T/mn et un débit de 15 T/h.

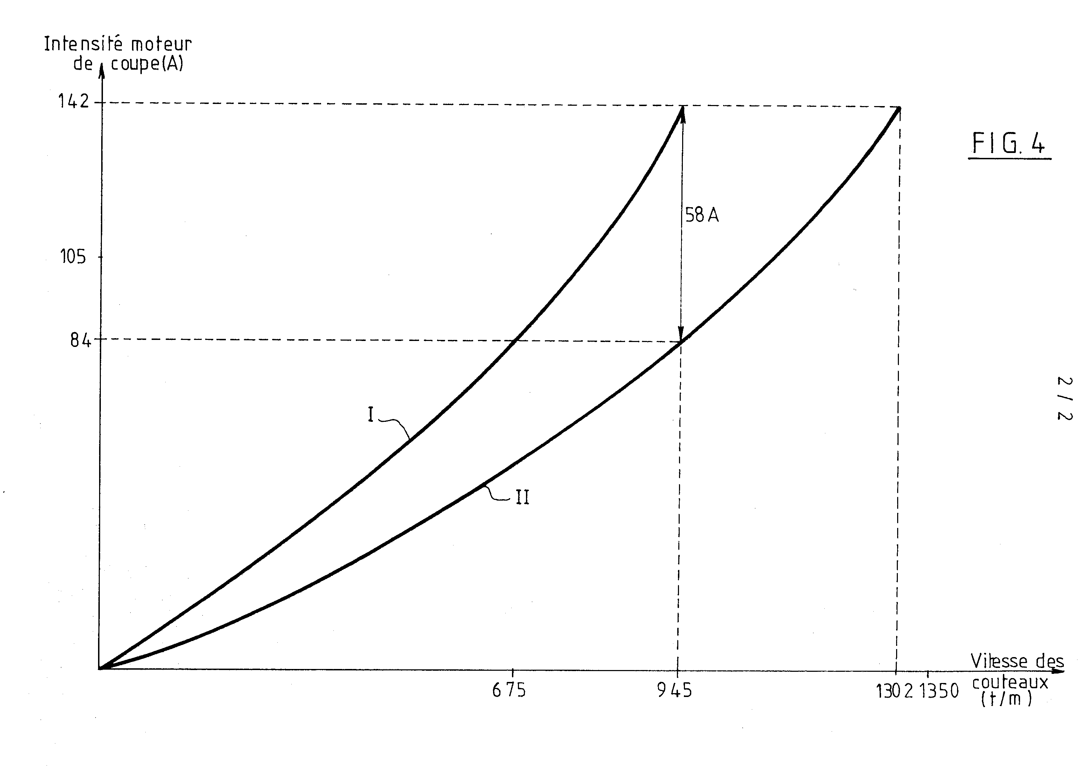

Si l'on se reporte à la figure 4 on voit que les couteaux conventionnels opposent une résistance telle au mouvement de rotation dans l'eau qu'une intensité de 142 A est atteinte dès la vitesse de rotation de 945 T/mn.

5

A cette vitesse le débit de granulation n'est que de 10,5 T/h. (I)
Avec les couteaux selon l'invention, l'intensité tirée par le moteur existant àla vitesse de 945 T/mn n'est que de 84 A, d'où une économie substantielle d'énergie électrique pour ce même débit de 10,5 T/h.

Les possibilités maximum des couteaux selon l'invention se situent, pour une intensité maximum tolérable de 142 A à une vitesse de rotation de 1302 T/mn, soit un débit résultant de 14,5 T/h. (II)

REVENDICATIONS

1 - Dispositif de coupe rotatif à couteaux multiples pour tête de granulation de matières thermoplastiques du type des têtes à immersion complète dans le liquide de refroidissement, coopérant avec une filière d'extrusion pourvue d'orifices d'extrusion disposés en une ou plusieurs couronnes centrées sur l'axe de la filière qui coïncide avec celui du dispositif de coupe rotatif caractérisé en ce que les couteaux ont une surface d'extrados inscrite dans un polygone régulier convexe d'angle au sommet compris entre 173° et 180°et que leur surface d'intrados possède un point d'inflexion situé à une distance comprise entre le quart et la moitié de la largeur du couteau et se complète au-delà de ce point d'inflexion par une surface de dessin semblable à celui de l'extrados.

2 - Couteaux d'un appareil de coupe rotatif immergé suivant 1 caractérisés en ce qu'ils sont positionnés de telle sorte que la distance entre leur arête de coupe et le plan de la filière d'extrusion est au plus de 0,6 mm.

0136194

FIG.1

1/2

FIG.2

FIG.3

FIG. 4

2/2

0136194

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| A | DE-B-1 121 592 (FELLNER & ZIEGLER) <br> * figure 2; colonne 4 * | 1 | B 29 B 9/06 |
| A | US-A-4 123 207 (DUDLEY) <br> * figures 6-8 * | 1 | |
| A | BE-A- 506 991 (MAPRE) <br> * en entier * | 1 | |
| A | FR-A- 919 261 (DU PONT) <br> * figure 4,5 * | 1 | |

DOMAINES TECHNIQUES RECHERCHES (Int. Cl.4)

B 29 B 9/00
B 29 F 3/00

Le présent rapport de recherche a été établi pour toutes les revendications

| Lieu de la recherche | Date d'achèvement de la recherche | Examinateur |
|---|---|---|
| LA HAYE | 14-11-1984 | KUSARDY R. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503 03 82